# EUROPÄISCHE PATENTSCHRIFT

(11) **EP 1 656 594 B1**
(45) Veröffentlichungstag und Bekanntmachung des Hinweises auf die Patenterteilung: **14.10.2009**
(21) Anmeldenummer: 04766448.7
(22) Anmeldetag: 09.08.2004
(51) Int. Cl.: G05B 19/042

(54) **ELEKTRONISCHES GERÄT MIT EINER NUTZERERKENNUNG**
ELECTRONIC DEVICE COMPRISING A USER IDENTIFICATION SYSTEM
DISPOSITIF ELECTRONIQUE POURVU D'UN SYSTEME DE RECONNAISSANCE D'UTILISATEUR

(30) Priorität: 11.08.2003 DE 10336814
(43) Veröffentlichungstag der Anmeldung: 17.05.2006
(73) Patentinhaber: ROBERT BOSCH GMBH, 70442 Stuttgart (DE)
(72) Erfinder: FLICK, Bernd, 31199 Diekholzen (DE); LIETZ, Stephan, 31162 Bad Salzdetfurth (DE)
(86) Internationale Anmeldenummer: PCT/EP2004/051745
(87) Internationale Veröffentlichungsnummer: WO 2005/017839

(56) Entgegenhaltungen:
- US-A1- 2002 190 960
- US-A1- 2003 046 557
- US-B1- 6 570 610

## Beschreibung

### Stand der Technik

Die Erfindung geht aus von einem elektronischen Gerät mit einer Nutzererkennung nach der Gattung des Hauptanspruchs. Aus der DE 198 20 026 A1 ist bereits ein Gehäuse für einen biometrischen Sensor zur Erfassung von Fingerminutien bekannt. Das Gehäuse weist eine Fingerführungshilfe in Form einer an den vorderen Teil des Fingers angepassten Vertiefung mit einem vorderen Anschlag für die Fingerspritze auf. Das Gerät dient zur Identifikation eines Gerätebenutzers. Der Sensor ist hierbei derart geformt und beleuchtet, dass er zum Beispiel auch bei Dunkelheit erfühlt und erkannt werden kann, so dass ein Benutzer die Identifikation durchführen kann.

Aus der US 2002/0190960 A1 ist ein Verfahren zur Steuerung eines Computercursors bekannt, bei der eine Cursorsteuerung erst in Abhängigkeit von einer erfolgreichen Identifikation eines zugelassenen Benutzers ermöglicht wird.

### Vorteile der Erfindung

Das erfindungsgemäße elektronische Gerät mit den Merkmalen des Hauptanspruchs hat demgegenüber den Vorteil, dass eine Identifikation des Benutzers während der Bedienung des elektronischen Gerätes erfolgt. Eine gesonderte Identifikation in einem vorgezogenen ldenfifikationsschritt ist nicht erforderlich, da eine Identifikation bei einer Benutzung der Bedienvorrichtung durchgeführt wird, wobei die Benutzung der Bedienvorrichtung der Steuerung des elektronischen Geräts dient. Daher ist es auch nicht erforderlich, entsprechend gesondert geformte Sensoren, die ausschließlich der Identifikation dienen, zum Beispiel an einer Bedienoberfläche des elektronischen Gerätes vorzusehen. Durch den Verzicht auf gesonderte Identifikationsvorrichtungen und durch die Integration der Identifikation in den Bedienablauf des elektronischen Gerätes wird der

Identifikationsvorgang vereinfacht. Eine gesonderte Anbringung von Sensoren zur Identifikation ist nicht erforderlich.

Durch die in den Unteransprüchen aufgeführten Maßnahmen sind vorteilhafte Weiterbildungen und Verbesserungen des im Hauptanspruch angegebenen elektronischen Gerätes möglich. Besonders vorteilhaft ist, einen Speicher zur Festlegung einer Funktion des elektronischen Gerätes in Abhängigkeit von der Identität des Benutzers vorzusehen. Hierdurch kann mittels der Identifikation eine Eingabe zur Bedienung des elektronischen Gerätes vereinfacht werden. Denn ein Benutzer muss die gespeicherte Funktion nicht gesondert aufrufen. Die Funktion wird entweder unmittelbar ausgeführt oder dem Benutzer zur Bestätigung und Ausführung bei einer positiven Bestätigung vorgeschlagen.

Erfindungsgemäß ist eine Ausgabeeinheit vorgesehen, die in Abhängigkeit von der Identität des Benutzers eine Funktionsauswahl zur Steuerung des elektronischen Geräts vorschlägt. Hierbei ist es entweder möglich, zum Beispiel bei einer verzweigten Menüstruktur, in ein spezielles, von dem Benutzer zuletzt oder häufig aufgerufenes Untermenü zu verzweigen oder ihm eine für den Benutzer persönlich zusammengestellte Funktionsauswahl verschiedener Funktionen mit der Ausgabeeinheit anzubieten.

Hierbei ist es insbesondere vorteilhaft, das Benutzerprofil, also festgelegte Funktionen und/oder Funktionsauswahlmöglichkeiten, in Abhängigkeit von der Bedienung des elektronischen Geräts zu verändern. Zum Beispiel ist es hierbei möglich, die von einem Benutzer zuletzt ausgewählten fünf Funktionen in einem Menü darzustellen. Ferner ist es auch möglich, nach der Identifikation ein zuletzt ausgewähltes Untermenü einer Funktionsauswahl zur Auswahl durch den identifizierten Benutzer auszugeben.

Erfindungsgemäss ist die Vorrichtung zur Identifikation an einem Drehregler anzuordnen. Erfindungsgemäss ist eine Fingerabdruckerkennung, d.h. eine Erfassung der Fingerabdrucklinien an dem Bedienelement, vorzusehen. Mittels einer Fingerabdruckerkennung ist eine sehr sichere Identifikation des Benutzers möglich.

### Zeichnung

Ausführungsbeispiele der Erfindung sind in der Zeichnung dargestellt und in der Beschreibung näher erläutert.

Es zeigen
- Figur 1: ein Ausführungsbeispiel für ein erfindungsgemäßes elektronisches Gerät,
- Figur 2: einen erfindungsgemäßen Bedienablauf zur Bedienung des elektronischen Geräts.

### Beschreibung des Ausführungsbeispiels

Das erfindungsgemäße elektronische Gerät kann beliebig ausgeführt sein. Es kann sich hierbei zum Beispiel um ein Haushaltsgerät, um eine öffentlich verfügbare Bedienkonsole, zum Beispiel einem Fahrkartenautomaten oder einem Geldautomaten, ein Mobiltelefon oder um ein elektronisches Gerät, zum Beispiel eine Navigationsvorrichtung, in einem Fahrzeug handeln. Durch eine Identifikation eines Benutzers kann dabei eine Funktion des elektronischen Geräts gegen eine unbefugte Ausführung durch eine nicht autorisierte Person gesichert werden. Besonders vorteilhaft ist jedoch eine Verwendung einer Identifikation zur vereinfachten Bedienung des elektronischen Geräts. Durch eine Zuordnung eines identifizierten Benutzers zu einer Funktion und/oder einer Funktionsauswahl des elektronischen Gerätes kann die Bedienung des elektronischen Gerätes dadurch vereinfacht werden, dass eine Auswahl von Funktionen und/oder eine Menüführung durch eine Vielzahl von Menüs zur Funktionsauswahl entfallen kann. Zudem können auch bestimmt bevorzugte Einstellungen des elektronischen Geräts gespeichert werden, so dass eine neue Eingabe dieser bevorzugten Eigenschaften nicht mehr erforderlich ist. Insbesondere Fahrerinformationsvornchtung in Fahrzeugen weisen einen großen Funktionsumfang auf. Für eine Bedienung der Fahrerinformationsvorrichtung steht jedoch einerseits nur ein begrenzter Platz infolge des beengten Einbauraums im Fahrzeug zur Verfügung. Andererseits ist eine bequeme Bedienung einer Fahrerinformationsvorrichtung erforderlich, da eine Bedienung entweder während oder vor einer Fahrt erforderlich ist. Während einer Fahrt darf die Bedienung den Fahrer nicht unnötig ablenken. Vor einer Fahrt sollte die Bedienung möglichst schnell ablaufen, damit der Fahrer auch seine Fahrt starten kann. Im Folgenden ist daher die vorliegende Erfindung anhand einer Ausführung des elektronischen Geräts als eine Fahrerinformationsvorrichtung in einem Kraftfahrzeug erläutert.

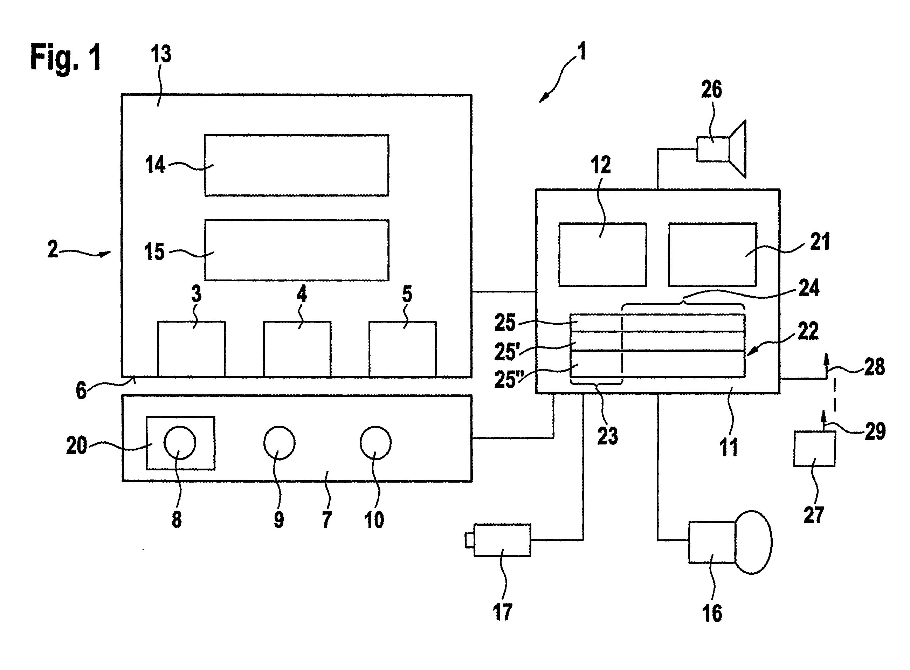

In der Figur 1 ist eine erfindungsgemäße Fahrerinformationsvorrichtung 1 dargestellt. Die Fahrerinformationsvorrichtung 1 weist zum Beispiel eine Navigationsfunktion zur Führung des Fahrzeugs, eine Bordcomputerfunktion zur Einstellung und Überprüfung von Fahrzeugparametern, wie zum Beispiel dem Spritverbrauch und/oder der Klimaregelung, und/oder eine Autoradiofunktion zur gezielten Auswahl eines Radioprogramms auf. Die Fahrerinformationsvorriclitung 1 umfasst eine Anzeige 2, in der Auswahlfelder 3, 4, 5 eingeblendet sind, die der Auswahl von Funktionen der Fahrerinformationsvornchtung 1 dienen. Zur möglichst flexiblen Darstellung ausführbarer Funktionen ist die Anzeige 2 vorzugsweise als eine Flüssigkristallanzeige ausgeführt. Die Auswahlfelder 3, 4, 5 sind hier an einem Rand 6 einer Anzeigefläche 13 dargestellt, der in einer bevorzugten Ausführungsform benachbart zu einer Bedieneinheit 7 der Fahrerinformationsvorrichtung 1 liegt. An der Bedieneinheit 7 sind Bedienelemente 8, 9, 10 vorgesehen, die jeweils den Auswahlfeldern 3, 4, 5 zugeordnet sind. Die Bedienelemente 8, 9, 10 sind in der hier dargestellten Ausführungsform als Drucktasten ausgeführt. Bei einer Betätigung einer der Drucktaste 8, 9, 10 wird die jeweils in dem zugeordneten Auswahlfeld 3, 4, 5 dargestellte Funktion der Fahrerinformationsvorrichtung 1 ausgeführt. Die von der Bedieneinheit erfasste Betätigung der Bedienelemente 8, 9, 10 wird an eine Steuereinheit 11 der Fahrerinformationsvorrichtung 1 weitergeleitet. Die Steuereinheit 11 weist eine Recheneinheit 12 auf, die die entsprechende, in dem jeweiligen Auswahlfeld 3, 4, 5 dargestellte Funktion der Fahrerinformationsvorrichtung 1 auslöst, zum Beispiel die Berechnung einer Fahrtroute zu einem in dem Auswahlfeld 3 dargestellten Fahrziel.

An dem ersten Bedienelement 8 ist ferner ein Fingerabdrucksensor 20 angeordnet, der bei einer Berührung des ersten Bedienelements 8 die Fingerabdrucklinien (Minutien) des Fingerabdrucks des Fingers erfasst, mit dem das erste Bedienelement 8 bedient wird. Der Fingerabdrucksensor 20 ist vorzugsweise derart in das Bedienelement integriert, dass für einen Benutzer eine Fingerabdruckerkennungsfunktion nicht erkennbar ist. Der Fingerabdrucksensor 20 kann hierzu auch in das erste Bedienelement, das z.B. in einer Ausführungsform als eine Drucktaste ausgeführt ist, eingebaut sein, wobei sich das erste Bedienelement äußerlich nicht von den anderen Bedienelementen 9, 10 unterscheidet. Eine Fingerabdruckerfassung dann erfolgt durch eine Deckfläche des ersten Bedienelements 8, die bei einer Betätigung des ersten Bedienelements 8 berührt wird. Die Fingerabdrucklinien können hierbei optisch oder kapazitiv erfasst werden. Die erfassten Fingerabdruckdaten werden an die Steuereinheit 11 weitergeleitet und von einer Identifikationseinheit 21 ausgewertet. Die Identifikationseinheit 21 greift hierzu auf einen Speicher 22 in der Steuereinheit 11 zu. In einem ersten Bereich 23 des Speichers 22 sind hierzu Identifikationsdaten abgelegt, mittels denen erfasste Fingerabdruckdaten einem bestimmten Benutzer geändert werden können. In einem zweiten Speicherbereich 24 sind Funktionen und/oder Funktionsauswahlinöglichkeiten und/oder Parameter der Fahrerinformationsvorrichtung so abgelegt, dass sie einem jeweiligen Benutzer in dem ersten Speicherbereich 23 zugeordnet sind. Für einen Benutzer ist dann ein jeweiliger Datensatz 25, 25', 25" in dem Speicher 22 abgelegt.

In einer bevorzugten Ausführungsform erfolgt eine Menüführung bei einer Bedienung der Fahrerinformationsvorrichtung 1 derart, dass zumindest einmal bei einer Bedienung, möglichst bereits nahe dem Beginn einer Bedienung, das erste Bedienelement 8 von dem Benutzer bedient werden muss. Bevorzugt weist das erste Bedienelement 8 eine Eingabefunktion bzw. eine Bestätigungsfunktion, entsprechend zum Beispiel einer sogenannten "Enter-Taste" an einem Rechner auf, deren Bedienung für eine Auswahl zumindest einem Teil der Funktionen erforderlich ist. Hierdurch ist sichergestellt, dass während der Bedienung auch tatsächlich eine Identifikation erfolgen kann.

Erfindungsgemäss ist eine sogenannte Dreh-Drück-Funktion vorgesehen. Hierzu ist das Bedienelement als ein Drehregler ausgeführt, mit dem zwischen verschiedenen, in der Anzeige 2 dargestellten Funktionen, gewechselt werden kann. Die Funktion wird jedoch erst dann ausgeführt, wenn ein Druck auf das Bedienelement ausgeübt wird. In einer bevorzugten Ausgestaltung ist dabei ein Sensor zur Fingerabdruckerfassung so an dem Bedienelement angeordnet, dass eine Minutienerfassung des Fingerabdrucks bei einem Druck auf das Bedienelement durchgeführt wird.

In einer weiteren Ausführungsform ist es auch möglich, dass jedem Bedienelement 8, 9, 10 jeweils ein Sensor zur Fingerabdruckerfassung zugeordnet ist. In einer weiteren Ausführungsform kann die Anzeige 2 auch als ein berührungsempfindlicher Bildschirm ausgeführt sein, der über eine Berührung der Anzeigefläche 13 gesteuert wird. Auswahlfelder 14, 15, in denen Funktionen der Fahrerinformationsvorrichtung 1 dargestellt werden, können über eine Berührung des jeweiligen Auswahlfeldes 14, 15 ausgelöst werden. Zur Identifikation des Benutzers ist hierfür ein Fingerabdrucksensor an oder hinter der Anzeigefläche 13 vorgesehen, wobei eine Identifikation des Benutzers bei einer Berührung der Anzeigefläche 13 erfolgt.

Ergänzend oder statt einer Identifikation über eine Betätigung von Bedienelementen kann auch eine Steuerung der Fahrerinforinationsvorrichtung über eine Spracherkennung vorgesehen sein. Hierzu weist die Fahrerinformationsvorrichtung 1 ein Mikrofon 16 auf, wobei gesprochene Befehle von der Recheneinheit 12 analysiert und in Befehle an die Fahrerinformationsvorrichtung 1 umgesetzt werden. In dem ersten Speicherbereich 23 können hierzu Sprachmuster abgelegt sein, die einem jeweiligen Benutzer zugeordnet sind. Spricht nun ein Benutzer der Fahrerinformationsvorrichtung 1 einen Befehl und wird dieser über das Mikrofon 16 erfasst, so wird zugleich mittels der Identifikationseinheit 21 der gesprochene Sprachbefehl mit den in dem ersten Speicherbereich 23 des Speichers 22 abgelegten Sprachmustern verglichen und der Sprecher wird damit wenn möglich identifiziert. Entsprechend einer Identifikation über eine Betätigung der Bedienelemente 8, 9, 10 werden entsprechende Funktionen, Funktionsauswahlen oder Parameter der Fahrerinformationsvorrichtung 1 in Abhängigkeit von der Spracheingabe eingestellt. Eine Identifikation wird insbesondere dadurch erleichtert, dass sich bestimmte Befehle bei der Steuerung der Fahrerinformationsvorrichtung 1 wiederholen, so dass gegebenenfalls nur für wenige, festgelegte Befehle Sprachinformationen zur Benutzeridentifikation gespeichert werden müssen.

In einer vorteilhaften Ausführung ist die Steuereinheit 11 mit einem Lautsprecher 26 verbunden, über den eine akustische Rückmeldung an einen Benutzer ausgegeben wird, ob ein bestimmter Befehl ausgeführt wird. Ferner ist es möglich, über den Lautsprecher 26 auch verschiedene Befehle einem Benutzer zur Auswahl anzubieten. Er kann dann über das Sprechen des jeweiligen Befehls die angegebene Funktion aufrufen. Somit dient die akustische Ausgabe dazu, gewissermaßen ein gesprochenes Auswahlmenü von möglichen, auswählbaren Funktionen anzubieten.

In einer weiteren Ausführung der Erfindung ist es auch möglich, dass entweder bei einer Betätigung eines der Bedienelemente 8, 9, 10 oder bei einem gesprochenen Befehl eine Kamera 17 aktiviert wird. Die Kamera nimmt ein Bild des Benutzers auf Entsprechende Bildinformationen sind gegebenenfalls in dem ersten Speicherbereich 23 jeweiligen Benutzern zugeordnet abgelegt. Die Identifikationseinheit 21 führt einen Vergleich zwischen den von der Kamera 17 aufgenommenen Bildinformationen und den in dem ersten Speicherbereich 23 abgelegten Bildinformationen zur Identifikation eines Benutzers durch. Wird ein Benutzer identifiziert, wird entsprechend der Identifikation über die Fingerabdruckerkennung bzw. über eine Spracherkennung verfahren.

Neben den bisher genannten Identifikationsverfahren sind auch weitere Verfahren zur Benutzererkennung möglich. So ist es zum Beispiel möglich, aus der Art der Eingabe, zum Beispiel aus der Auswahl bestimmter Funktionen und/oder Auswahlmenüs zur Funktionseingabe, auf einen bestimmten Benutzer zu schließen. Hierzu werden Eingaben, die zum Beispiel über die Bedienelemente 8, 9, 10 oder über die Spracheingabe mit dem Mikrofon 16 vorgenommen werden, mit in dem zweiten Speicherbereich 24 abgelegten Nutzerprofilen verglichen. Wird hierbei eine hinreichende Übereinstimmung festgestellt, so wird eine entsprechende Identität des Benutzers festgelegt, so dass dem Benutzer im Folgenden eine Einstellung gemäß seinem persönlichen Benutzerprofil angeboten wird.

Die Genauigkeit der Benutzererkennung ist davon abhängig, ob die Identifikation Sicherheitsrelevanz aufweist oder lediglich der Vereinfachung der Eingabe zum Erreichen eines höheren Komforts dient. Bei einer Sicherheitsrelevanz ist eine höhere Genauigkeitsschwelle der Identifikation erforderlich. Sind lediglich Komfortfunktionen gefragt, kann die Genauigkeitsschwelle für die Identifikation eines Benutzers geringer gesetzt werden. Selbst wenn Zweifel bestehen, kann dann gegebenenfalls eine entsprechende Funktion vorgeschlagen bzw. eine Funktionsauswahl angezeigt werden. Gegebenenfalls kann auch seitens der Fahrerinformationsvorrichtung eine Rückfrage vorgesehen sein, ob der Benutzer tatsächlich derjenige ist, der durch die automatische Identifizierung von der Fahrerinformationsvorrichtung erkannt wurde.

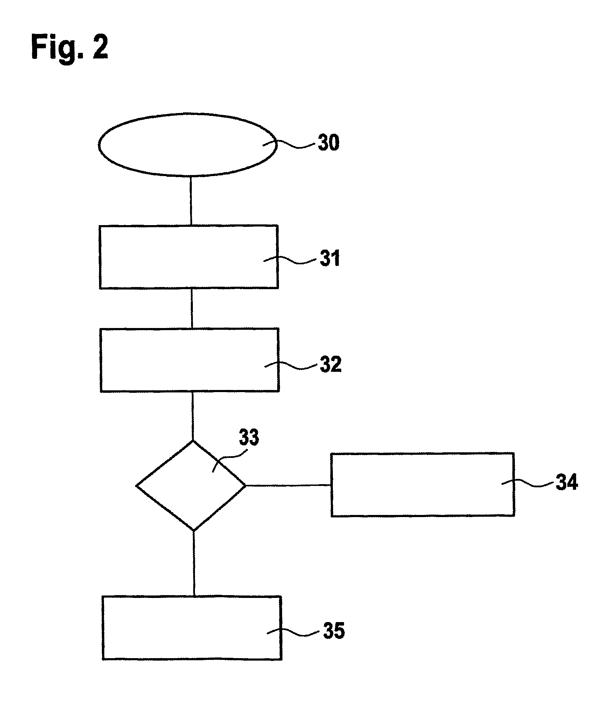

In der Figur 2 ist ein Ausführungsbeispiel für einen Betrieb der erfindungsgemäßen Fahrerinformationsvorrichtung 1 dargestellt. Ausgehend von einem Startschritt 30 wird die Bedienung der Fahrerinformationsvorrichtung 1 gestartet. In einem ersten Erfassungsschritt 31 wird eine Bedieneraktion, zum Beispiel ein Bedienen des ersten Bedienelements 8 oder ein gesprochenes Sprachsignal, von der Fahrerinformationsvorrichtung 1 erfasst. In einem zweiten Identifikationsschritt 32 werden die ermittelten Daten von der Identifikationseinheit 21 zur Feststellung des jeweiligen Benutzers analysiert. Hierbei ist es nicht erforderlich, dass ein Benutzer ein gesondertes Bedienelement zur Identifikation berührt oder einen gesonderten Sprachausdruck zur akustischen Identifikation verwendet. Vielmehr wird entweder unmittelbar während der Bedienung des Bedienelements oder durch Analyse des gesprochenen Steuerbefehls eine Benutzeridentifikation durchgeführt bzw. die Kameravorrichtung zur Identifikation des Benutzers ausgelöst. In einem anschließenden Prüfschritt 33 wird überprüft, ob ein Benutzer erkannt wurde, für den bereits in dem Speicher 22 ein Benutzerprofil abgelegt ist. Ist dies der Fall, so wird in einem Einstellschritt 34 die Fahrerinformationsvornchtung entsprechend der Konfiguration durch den Benutzer eingestellt. Hierbei ist es zum Beispiel möglich, ein von dem Benutzer persönlich konfiguriertes Bedienmenü in der Anzeige 2 darzustellen. Ferner ist es auch möglich, vom Benutzer gewünschte Bildschirmeinstellungen vorzunehmen. Weiterhin ist es möglich, dass von dem Benutzer eingestellte Fahrzeuggrößen, zum Beispiel eine gewünschte Innentemperatur des Fahrzeugs und/oder eine gewünschte Sitzposition des Fahrzeugs von der Fahrerinformationsvorrichtung eingestellt und über in der Zeichnung nicht dargestellte Stellglieder geregelt wird. Bezüglich einer Navigationsfunktion ist es auch möglich, dass die zuletzt von dem Benutzer angefahrenen Fahrziele zur erneuten Auswahl in der Anzeige 2 dargestellt werden. Wird in dem Prüfschritt 33 dagegen festgestellt, dass eine Identifikation nicht erfolgt ist, so kann darüber gegebenenfalls eine Rückmeldung erfolgen. Es kann jedoch auch unmittelbar mit der Eingabe nach einer vorgegebenen, allgemeinen Menüstruktur weiter verfahren werden. Hierzu schließt sich ein Eingabeschritt 35 an, bei dem der Benutzer gegebenenfalls bestimmte Parameter nach Aufforderung einstellen muss bzw. durch eine entsprechende Auswahl über eine Menüabfolge auswählen muss. In einer bevorzugten Ausgestaltung kann sich hieran eine Abfrage anschließen, ob ein Benutzer das Anlegen eines Profils in dem Speicher 22 wünscht. In einer weiteren Ausführungsform kann sich ein Anlegen eines derartigen Profils nach einer ersten Identifizierung des Benutzers auch automatisch anschließen.

In einer weiteren Ausführungsform erfolgt eine Identifikation eines Benutzers über eine Speicherkarte 27, die der Benutzer mitführt. Wird ein Bedienelement bedient, wird von der Steuereinheit 11 automatisch auf die Speicherkarte zugegriffen und es wird eine Benutzeridentifikation anhand der auf der Speicherkarte abgelegten Benutzerinformationen vorgenommen. Einstellungen werden entsprechend der oben erläuterten Identifikationen vorgenommen. Die Speicherkarte 27 kann über ein in der Zeichnung nicht dargestelltes Lesegerät mit der Steuereinheit verbunden werden. Bevorzugt weist jedoch die Speicherkarte einen Transponder 29 auf. Über eine Empfangsvorrichtung 28 können die Informationen von der Steuereinheit 11 damit drahtlos von der Speicherkarte 27 ausgelesen werden.

Die Anwendung der vorliegenden Erfindung ist nicht auf eine Verwendung im Kraftfahrzeug beschränkt. So ist zum Beispiel auch eine Verwendung bei einer Kaffeemaschine möglich, die die Zusammensetzung von Wasser variiert. Wird die Maschine eingeschaltet bzw. ein Brühvorgang aktiviert, so kann der Nutzer nach einer erfolgreichen Identifikation gefragt werden, ob der Kaffee "wie beim letzten Mal", "stärker" oder "schwächer" gebrüht werden soll. Nach einer entsprechenden Rückmeldung durch den Benutzer kann der Brühvorgang starten. Erfolgt innerhalb eines vorgegebenen Zeitraums keine Rückmeldung, so wird der Brühvorgang in einer bevorzugten Ausführungsform automatisch mit den zuletzt gewählten Einstellungen gestartet. Wird ein Benutzer nicht identifiziert, so werden ihm beispielsweise acht verschiedene Möglichkeiten der Einstellung angeboten der Kaffeestärke, zwischen denen er auswählen muss.

## Patentansprüche

1. Elektronisches Gerät mit mindestens einer Bedienvorrichtung zur Steuerung des elektronischen Geräts, wobei das elektronische Gerät (1) mit einer Vorrichtung zur Identifikation eines Benutzers (7, 13, 16, 17, 20, 27) derart ausgestattet ist, dass der Benutzer bei einer Benutzung der Bedienvorrichtung zur Steuerung des elektronischen Geräts identifiziert wird, und mit einer Anzeige (2) zur Ausgabe einer Funktionsauswahl des elektronischen Geräts in Abhängigkeit von der Identität des Benutzers, **dadurch gekennzeichnet, dass** die Bedienvorrichtung als ein Drehregler (7) ausgeführt ist, mit dem zwischen in der Anzeige (2) dargestellten Funktionen gewechselt werden kann, dass eine Funktion erst dann ausgeführt wird, wenn ein Druck auf das Bedienelement ausgeübt wird, und dass ein Sensor zur Fingerabdruckerkennung derart an dem Drehregler angeordnet ist, dass eine Minutienerfassung des Fingerabdrucks bei einem Druck auf den Drehregler durchgeführt wird.

2. Elektronisches Gerät nach Anspruch 1, **gekennzeichnet durch** einen Speicher zur Festlegung einer Funktion des elektronischen Geräts (1) in Abhängigkeit von der Identität des Benutzers.

## Claims

1. Electronic device comprising at least one operator control device for controlling the electronic device, wherein the electronic device (1) is equipped with a device for identifying a user (7, 13, 16, 17, 20, 27) in such a way that when the operator control device is being used to control the electronic device the user is identified, and comprising a display (2) for outputting a function selection of the electronic device in accordance with the identity of the user, **characterized in that** the operator control device is embodied as a rotary controller (7) with which it is possible to change between functions represented on the display (2), **in that** a function is not carried out until pressure is applied to the operator control element, and **in that** a sensor for detecting a fingerprint is arranged on the rotary controller in such a way that a minutiae sensing of the fingerprint is carried out when pressure is applied to the rotary controller.

2. Electronic device according to Claim 1, **characterized by** a memory for defining a function of the electronic device (1) in accordance with the identity of the user.

## Revendications

1. Appareil électronique comprenant au moins un dispositif de commande pour commander l'appareil électronique, l'appareil électronique (1) étant muni d'un dispositif pour l'identification d'un utilisateur (7, 13, 16, 17, 20, 27), de telle sorte que l'utilisateur soit identifié, dans le cas d'une utilisation du dispositif de commande pour la commande de l'appareil électronique, et comprenant un affichage (2) pour afficher un choix de fonctions de l'appareil électronique en fonction de l'identité de l'utilisateur, **caractérisé en ce que** le dispositif de commande est réalisé sous forme de régulateur rotatif (7), avec lequel on peut permuter entre des fonctions illustrées dans l'affichage (2), **en ce qu'**une fonction n'est réalisée que lorsqu'une pression a été exercée sur l'élément de commande, et **en ce qu'**un capteur pour la reconnaissance de la pression des doigts est disposé sur le régulateur rotatif de telle sorte qu'une détection extrêmement précise de la pression des doigts soit effectuée en cas d'application de pression sur le régulateur rotatif.

2. Appareil électronique selon la revendication 1, **caractérisé par** un accumulateur pour établir une fonction de l'appareil électronique (1) en fonction de l'identité de l'utilisateur.
